Europäisches Patentamt

European Patent Office

Office européen des brevets

(19)

(11) Veröffentlichungsnummer: **0 015 563**
**A 1**

(12) # EUROPÄISCHE PATENTANMELDUNG

(21) Anmeldenummer: **80101154.5**

(22) Anmeldetag: **07.03.80**

(51) Int. Cl.³: **C 09 B 67/00, C 09 B 3/22**

(30) Priorität: **12.03.79 DE 2909568**

(43) Veröffentlichungstag der Anmeldung: **17.09.80**
**Patentblatt 80/19**

(84) Benannte Vertragsstaaten: **AT BE CH DE FR GB IT NL SE**

(71) Anmelder: **BASF Aktiengesellschaft, Carl-Bosch-Strasse 38, D-6700 Ludwigshafen (DE)**

(72) Erfinder: **Hoch, Helmut, Dr., Waldstrasse 53C, D-6706 Wachenheim (DE)**
Erfinder: **Hahn, Erwin, Dr., Am Buechsenackerhang 31, D-6900 Heidelberg (DE)**
Erfinder: **Hiller, Heinrich, Dr., Theodor-Heuss-Strasse 11, D-6706 Wachenheim (DE)**

(54) Verfahren zur Herstellung von farbstarken, brillanten, lasierenden Pigmentformen des Bromisoviolanthrons.

(57) Verfahren zur Herstellung von Pigmentformen des Bromisoviolanthrons, bei dem die Leukoverbindung in wässrig-alkalischem Medium in Gegenwart oberflächenaktiver Mittel unter Einwirkung von Scherkräften bei Temperaturen zwischen 10 und 100°C oxidiert wird.

Das erhaltene Pigment gibt Purtonfärbungen mit hoher Lasur und hoher Brillanz und im Weissverschnitt sehr farbstarke Färbungen.

EP 0 015 563 A1

0015563

## Verfahren zur Herstellung von farbstarken, brillanten, lasierenden Pigmentformen des Bromisoviolanthrons

Die Erfindung betrifft ein Verfahren zur Herstellung von Pigmentformen des Bromisoviolanthrons, die brillante, lasierende und farbstarke violette Färbungen liefern.

Als Bromisoviolanthron werden Verbindungen der Isodibenzanthron-Reihe bezeichnet, die ungefähr 12 bis 17 % Brom und bis zu 1 % Chlor enthalten. Solche Verbindungen sind als Küpenfarbstoffe bekannt (vgl. Color Index, Vat Violet 9, C.I. Nr. 60005). Aus der DE-PS 12 84 092 ist die Verwendung von Bromisoviolanthronen als Pigment für Druckfarben, Leimfarben, Binderfarben, Lacke oder Kunststoffe bekannt.

Nach der DE-AS 12 84 092 wird die α-Modifikation des Pigments durch Quellung des rohen Bromisoviolanthrons in 90 bis 90,5 gewichtsprozentiger Schwefelsäure und Austragen der Quellungsmischung in eine wäßrige Dispergiermittellösung erhalten. Die β-Modifikation des Pigments entsteht aus der α-Modifikation durch Erhitzen des wäßrigen Teigs in Gegenwart von N-Methylpyrrolidon und des Natriumsalzes des Kondensationsproduktes aus Naphthalin-2-sulfonsäure und Formaldehyd. Nach den Angaben in der DE-PS 12 84 092 sind diese Pigmente ausgezeichnet temperaturbeständig und sehr gut licht- und wetterecht. Im Vergleich zu den Chlorisoviolanthronen, z.B. Pigment Violett 31, C.I. Nr. 60010 besitzen erstere erheblich bessere Lösungsmittel-, Wetter- und Migrationsechtheiten.

Im Vergleich zu den in der DE-PS 9 50 188 beschriebenen Pigmentformen des Bromisoviolanthrons weisen die in der DE-PS 12 84 092, Beispiele 1 und 2 beschriebenen Bromisoviolanthron-Pigmente erhöhte Brillanz und Farbstärke auf.

0015563

Im Vergleich zu farbtonähnlichen Dioxazin-Pigmenten, z.B. Carbazol-Dioxazin-Violet, Pigment Violet 23, C.I. Nr. 51319 liefern jedoch die Bromisoviolanthronpigmente der DE-PS 12 84 092 deutlich farbschwächere, trübere und blauere Färbungen bei gleichzeitig deckenderem Vollton.

Aufgrund der guten Echtheitseigenschaften und der guten Eignung zum Überfärben von anorganischen Pigmenten sollten die Pigmente auf der Basis Bromisoviolanthron von Interesse sein. Jedoch werden diese Pigmente - wegen der geringen Farbstärke und des trüben Farbtons - nur in begrenztem Umfang angewendet.

Aufgabe der Erfindung war es ein Verfahren aufzufinden, nach dem Pigmentformen des Bromisoviolanthrons erhalten werden, die in Lacken lasierende Volltonfärbungen von hoher Brillanz und Farbstärke liefern. Ein weiteres Ziel für das zu entwickelnde Verfahren war, daß dieses technisch gut und reproduzierbar und kostengünstig durchzuführen sein sollte.

Es wurde gefunden, daß man Bromisoviolanthron (C.I. Vat. Violett 9; C.I. Nr. 60005) in eine coloristisch wertvolle Pigmentform der $\alpha$-Modifikation überführen kann, wenn man Leukobromisoviolanthron in einem wäßrigen-alkalischen Medium in Gegenwart von oberflächenaktiven Mitteln unter Einwirkung von Scherkräften bei Temperaturen zwischen 10 und 100°C oxidiert und das Pigment isoliert.

Das nach dem Verfahren gemäß der Erfindung erhaltene Pigment gibt in Lacken Färbungen mit - im Vergleich zu den aus der DE-PS 12 84 092 bekannten Pigmenten - erhöhter Lasur und wesentlich höherer Brillanz. In Weißverschnitt zeigt das nach dem erfindungsgemäßen Verfahren erhaltene Pigment

0015563

nahezu die doppelte Farbstärke bei gleichzeitig reinerem und rotstichigerem Farbton.

Im Vergleich zum Dioxazinpigment Pigment Violett 23; C.I. Nr. 51319 weist das nach dem vorliegenden Verfahren erhaltene Bromisoviolanthronpigment ungefähr gleiche Farbstärke und Brillanz auf; der Farbton ist jedoch deutlich rotstichiger.

Das nach dem Verfahren gemäß der Erfindung erhaltene Pigment ist in Druckfarben und Lacken gut verteilbar.

Das erfindungsgemäße Verfahren wird im allgemeinen so durchgeführt, daß man der Suspension des Leukobromisoviolanthrons, die Alkalimetallhydroxid enthält, mindestens ein oberflächenaktives Mittel zugibt und dann die Leukoverbindung unter Einwirkung von Scherkräften bei Temperaturen zwischen 10 und 100°C oxidiert. Nach der Beendigung der Oxidation wird das Pigment abgetrennt und isoliert.

Die Suspension des Leukobromisoviolanthrons, das in Form des Alkalimetallsalzes vorliegt und das im folgenden auch als Leukoverbindung bezeichnet wird, kann durch Verküpen von Bromisoviolanthron direkt oder durch Suspendieren von vorher isolierter Leukoverbindung hergestellt werden. In letzterem Fall erfolgt das Verküpen des Bromisoviolanthrons in der 20- bis 60-fachen Gewichtsmenge Wasser, bezogen auf die Isoviolanthronverbindung.

Die Menge an Alkalimetallhydroxyd, das vorzugsweise in Form von Natronlauge angewendet wird, hängt von der Menge Dithionit ab. Die Alkalimetallhydroxidmenge beträgt im allgemeinen bei der Verwendung von Natriumhydroxyd das 1- bis 2-fache der Menge an Alkalimetalldithionit. Die benötigte Menge an Dithionit, das vorzugsweise in Form des Natriumsalzes verwendet wird, liegt - bezogen auf Bromisoviolanthron - bei der 0,1- bis 0,5-fachen Gewichtsmenge.

Die Verküpung erfolgt bei Temperaturen zwischen 10 und 80°C, insbesondere bei 20 bis 60°C. Die Reduktion ist nach 0,15 bis 2 Stunden beendet und die Leukoverbindung ausgefallen. Die Leukoverbindung wird isoliert. Man kann die vorliegende wäßrige Suspension auch direkt weiterverarbeiten, was wegen des großen Flüssigkeitsvolumens jedoch nicht zweckmäßig ist (geringe Raum-Zeit-Ausbeute an der Pigmentform).

Die Isolierung der Küpen-Form des Bromisoviolanthrons ist dann vorteilhaft, wenn eine zusätzliche Reinigung des Ausgangsprodukts z.B. von in der Küpe löslichen Nebenprodukten, erfolgen soll. Das Filtergut wird dann zweckmäßigerweise mit blinder Küpe von 20 bis 30°C gewaschen, bis der Ablauf nur noch schwach violett gefärbt ist. Als blinde Küpe wird eine Lösung von 20 Gewichtsteilen 50 gewichtsprozentiger Natronlauge und 10 Gewichtsteilen Natriumdithionit in 1.000 Gewichtsteilen Wasser verwendet.

Geht man von Bromisoviolanthron aus, das für Pigmentzwecke genügend rein ist, kann die beim Verküpen erhaltene Suspension der Leukoverbindung direkt oxidiert werden. In diesem Fall wird das Bromisoviolanthron vorteilhafterweise in einer 8 bis 15 gewichtsprozentigen wäßrigen Suspension verküpt. In diesem Fall wendet man zum Verküpen die 0,2 bis 0,5-fache Gewichtsmenge an Natriumhydroxid und die 0,2 bis 0,5-fache Menge an Natriumdithionit - bezogen auf Bromisoviolanthron, an. Die Verküpung ist in der Regel nach 5 bis 20 Minuten vollständig.

0015563

Die Oxidation erfolgt in alkalisch-wäßrigem Medium in Gegenwart von oberflächenaktiven Mitteln unter Einwirkung von Scherkräften. Vorteilhafterweise oxidiert man die Leukoverbindung in einer alkalisch-wäßrigen Suspension, die zu Beginn der Oxidation 1 bis 20 Gewichtsprozent, bezogen auf die Leukoverbindung, Natriumdithionit enthält. Die Suspension der Leukoverbindung enthält vorteilhafterweise - bezogen auf die Leukoverbindung - 5 bis 30 Gewichtsprozent Alkalimetallhydroxid, vorzugsweise Natriumhydroxid, und 1 bis 20, vorzugsweise 5 bis 10 Gewichtsprozent Natriumdithionit und das oder die oberflächenaktiven Mittel. Die Konzentration der Leukoverbindung in der Suspension liegt in der Regel zwischen 5 und 15 Gewichtsprozent.

Die Scherkräfte werden in der wäßrigen Suspension durch Mahlkörper vorzugsweise Glas-, Keramik-, Metall- oder Kunststoffkugeln oder Sand, die durch schnell laufende Rührer bewegt werden, erzeugt. Als Geräte kommen hierfür z.B. Sandmühlen, Perlmühlen in Betracht.

Die Menge der Mahlkörper liegt in der Regel zwischen der 20- und 40-fachen Gewichtsmenge, bezogen auf die Leukoverbindung.

Die Oxidation kann durch Einleiten von Luft während des Mahlens oder durch Zugabe von Oxidationsmitteln vor und bzw. oder während dem Mahlen erfolgen.

0015563

Als Oxidationsmitel kommen Luftsauerstoff, oxidierend wirkende Salze wie Nitrate, Chlorate, oxidierend wirkende verdünnte Säuren wie verdünnte Salpetersäure, Nitroverbindungen wie 3-Nitrobenzolsulfonsäure, Wasserstoffperoxid und dessen Addukte wie Natriumpercarbonat oder -perborat in Betracht. Die Oxidationstemperatur liegt zwischen 10 und 100°C, vorzugsweise zwischen 20 und 60°C. Als Oxidationsmittel ist Luftsauerstoff bevorzugt.

Als erfindungemäß zu verwendende oberflächenaktive Mittel kommen nichtionische, vor allem jedoch anionische und kationische in Betracht.

Die Menge an diesen Mitteln beträgt 0,2 bis 20, vorzugsweise 0,5 bis 15 Gewichtsprozent, bezogen auf die Leukoverbindung.

Als anionische oberflächenaktive Mittel sind z.B. zu nennen: $C_{13}$- bis $C_{18}$-Paraffinsulfonsäuren, $C_{13}$- bis $C_{18}$-Paraffindisulfonsäuren, Sulfobernsteinsäure-di-$C_1$- bis $C_4$-alkylester, sulfiertes Ölsäuredibutylamid, $C_8$- bis $C_{18}$-Alkylbenzolsulfonate, Mono- und Di-$C_3$- bis $C_8$-Alkyl-naphtalin-2-sulfonsäure, Kondensationsprodukte aus Naphthalin-2-sulfonsäure oder $C_1$- bis $C_4$-Alkylnaphthalin-2-sulfonsäure und Formaldehyd und Kondensationsprodukte auf der Basis Formaldehyd, Phenolsulfonsäure und Harnstoff, N-$C_{12}$- bis $C_{18}$-Alkyl-N-methyl-amino-essigsäuren, Abietinsäure, Kolophonium, hydriertes Kolophonium und dimerisiertes Kolophonium in Form der Alkalimetall- und/oder Ammoniumsalze.

0015563

Als nichtionische oberflächenaktive Verbindungen kommen z.B. in Betracht: $C_{12}$- bis $C_{20}$-Fettalkohole, Anlagerungsprodukte von Äthylenoxid an $C_{10}$- bis $C_{20}$-Fettalkohole, an Fettsäuren mit 16 bis 20 C-Atomen, an Amide von $C_{16}$- bis $C_{20}$-Fettsäuren, an Kolophonium, an $C_{16}$- bis $C_{20}$-Alkylamine, an Mono-$C_{12}$- bis $C_{20}$-Alkenylamine, wie Oleylamin, an $C_8$- bis $C_{20}$-Alkylphenole, an Monoglyceride von Fettsäuren, wobei das Verhältnis von Äthylenoxid zu oxalkylierendem Produkt im allgemeinen zwischen 1:1 und 30:1 Mol liegt.

Als kationische oberflächenaktive Mittel kommen z.B. in Betracht:
Salze des Tri-($C_1$- bis $C_4$-alkyl)-phenylammoniums, des Tri-($C_1$- bis $C_4$-alkyl)-benzylammoniums, des Di-($C_1$- bis $C_4$-alkyl)-dibenzylammoniums, des $C_{10}$- bis $C_{20}$-Alkyl--tri-($C_1$- bis $C_4$-alkyl)ammoniums, des Di-($C_{10}$- bis $C_{20}$--alkyl)-di-($C_1$- bis $C_4$-alkyl)ammoniums, der quaternären Tri-$C_1$- bis $C_8$-alkylammoniumpolyglykoläther, des N-$C_{10}$- bis $C_{16}$-Alkylpyridiniums, des Benzylpyridiniums und des N-$C_{10}$- bis $C_{18}$-Imidazoliniums und des quaternierten Esters aus Triäthanolamin und Stearinsäure (1:1 Mol) in Form der Chloride, Sulfate, Methylsulfate, Toluol- oder Benzolsulfonate.

Als oberflächenaktive Mittel sind Abietinsäure, Kolophonium, hydriertes Kolophonium und dimerisertes Kolophonium in Form der Alkalimetall- oder Ammoniumsalze und Salze des Tri-($C_1$- bis $C_4$-alkyl)-phenylammoniums, des Tri-($C_1$- bis $C_4$-alkyl)-benzylammoniums, des Di-($C_1$- bis $C_4$-alkyl)--dibenzylammoniums, des $C_{10}$- bis $C_{20}$-Alkyl-tri-($C_1$- bis $C_4$-alkyl)-ammoniums, des Di-($C_{10}$- bis $C_{20}$-alkyl)-di-($C_1$- bis $C_4$-alkyl)-ammoniums und des z.B. mit Dimethylsulfat quaternierten Esters aus Triäthanolamin und Stearinsäure (1:1) Mol in Form der Chloride, Sulfate, Methylsulfate, Toluol- oder Benzolsulfonate bevorzugt.

Als bevorzugte oberflächenaktive Mittel kommen außer den bereits im einzelnen genannten in Betracht: Trimethyllaurylammonium-, Distearyldiemethylammoniumsalze, mit 5 bis 10 Mol Äthylenoxid umgesetztes Oleylamin, das mit Dimethylsulfat quaterniert wurde und das durch Umsetzen von Triäthanolamin mit Stearinsäure (1 : 1 Mol) erhältliche und mit Dimethylsulfat quaternierte Estergemisch.

Besonders vorteilhafte Pigmente werden bei Anwendung von 10 bis 15 Gewichtsprozent, bezogen auf die Leukoverbindung, an anionischen oberflächenaktiven Mitteln, bei Anwendung von 5 bis 10 Gewichtsprozent an oberflächenaktiven quartären Ammoniumsalzen und bei Anwendung von oxäthyliertem Oleylamin (5 bis 10 Mol ÄO/Mol) erhalten.

So erhält man z.B. bei der Oxidation in Gegenwart von 10 bis 15 Gewichtsprozent (bezogen auf Leukoverbindung), Kolophonium, dimerem Kolophonium, hydriertem Kolophonium oder oxäthyliertem Kolophonium (20 bis 30 Mol ÄO/Mol) Pigmentformen, die hohe Farbstärke aufweisen und die Färbungen geben mit hoher Sättigung (d.h. reinem Farbton) und deutlich röterem Farbton.

Ein ähnliches Ergebnis erzielt man, wenn die Oxidation in Gegenwart von 4 bis 10 Gewichtsprozent (bezogen auf Leuko-verbindung) oberflächenaktiven quartären Ammoniumverbin-dungen, z.B. Lauryl-tri-methylammoniumchlorid durchführt.

Führt man die Oxidation unter Einwirkung von Scherkräften und in Gegenwart von Mischungen aus anionenaktiven und kationenaktiven Mitteln durch, erhält man besonders vor-teilhafte Pigmentformen des Bromisoviolanthrons.

Vorzugsweise erfolgt daher die Oxidation in Gegenwart von anionischen oberflächenaktiven Mitteln, insbesondere von

0015563

Kolophonium, dimerisiertem oder hydriertem Kolophonium und oberflächenaktiven quartären Ammoniumsalzen wie des Trimethyl-laurylammoniums, Distearyl-dimethylammoniums, des Estergemisches aus Stearinsäure/Triäthanolamin quaterniert mit Dimethylsulfat, des Dibenzyl-dimethylammoniums oder des Umsetzungsproduktes von Oleylamin mit 10 bis 25 Mol Äthylenoxid; z.B. wenn in einer Mischung, die - bezogen auf die Leukoverbindung - 10 bis 15 Gewichtsprozent Kolophonium, hydriertes und/oder dimerisiertes Kolophonium und 2 bis 5 Gewichtsprozent an oberflächenaktiven quartären Ammoniumsalzen enthält.

Als für diesen Fall geeignete oberflächenaktive quarternäre Ammoniumverbindungen sind z.B. zu nennen: Trimethyl-laurylammoniumsalz, Trimethylstearylammoniumsalz, Dimethyl-dibenzylammoniumsalze, mit Dimethylsulfat quaternierter Ester aus Stearinsäure + Triäthanolamin (1:1 Mol) und mit 5 bis 10 Mol AÖ oxäthyliertes und mit Dimethylsulfat quaterniertes Oleylamin.

Die durch Oxidation erhaltene wäßrig-alkalische Pigmentsuspension wird zunächst von den Mahlkörpern abgetrennt und danach mit Säure, bevorzugt 10 bis 30 gewichtsprozentige Salz- oder Schwefelsäure, neutral bis schwach sauer (pH 5-7) gestellt. Das Pigment wird in üblicher Weise, z.B. durch Filtrieren oder Zentrifugieren, abgetrennt, gewaschen und getrocknet. Die Trocknung erfolgt vorteilhaft unter milden Bedingungen, z.B. unter vermindertem Druck bei 60 bis 80°C.

Das Verfahren gemäß der Erfindung soll durch die folgenden Ausführungsbeispiele weiter erläutert werden. Die im folgenden genannten Teile und Prozentangaben beziehen sich auf das Gewicht.

0015563

Beispiel 1

50 Teile Bromisoviolanthron (= Vat Violet 9, C.I. Nr. 60005; hergestellt nach Beispiel 1 der DE-PS 12 84 092) werden in Form des wasserfeuchten Preßkuchens in 1700 Teile Wasser eingetragen, homogen gerührt. Bei 40°C werden 40 Teile Natronlauge (50 prozentig) und 20 Teile Natriumdithionit zugegeben und 2 Stunden nachgerührt. Das ausgefallene Salz der Leukoverbindung wird nach dem Abkühlen auf 20°C abgesaugt und mit 200 Teilen blinder Küpe (= Lösung von 20 Teilen Natronlauge 50 prozentig und 10 Teilen Natriumdithionit in 1 000 Teilen Wasser) gewaschen.

Das Filtergut wird mit Wasser zu einer Suspension angerührt, die einen Trockengehalt von etwa 10 % aufweist. Dann werden 20 Teile Natronlauge (50 prozentig) und 5 Teile Natriumdithionit unter Rühren zugegeben. Der Suspension werden eine alkalische Lösung, die 5 Teile Kolophonium-Seife in Form des Natrium-Salzes enthält, und 800 Teile Glasperlen oder Kunststoffperlen (Durchmesser 0,8 bis 1 mm) zugegeben. Anschließend wird die Suspension mit einem hochtourigen Rührer (2.000 U/min) unter Luftzutritt gerührt. Dabei wird die Temperatur zwischen 30 und 40°C gehalten. Nach 3 Stunden ist die Oxidation beendet.

Die Perlen werden von der Suspension abgesiebt und zur Entfernung von anhaftendem Farbstoff mit 500 Teilen Wasser gewaschen. Die wäßrige Suspension des Pigments wird mit 10 prozentiger Schwefelsäure auf pH 5,5 gestellt und 30 Minuten nachgerührt. Danach wird filtriert, das Filtergut neutralgewaschen und bei 70°C im Vakuum getrocknet.

0015563

Ausbeute: 49 Teile Pigment, das im Vollton des Einbrennlacks eine deutlich brillantere und lasierendere Färbung liefert als das in der DE-PS 12 84 092 beschriebene Pigment. Die Weißaufhellung ist deutlich farbstärker, bei deutlich röterem und reinerem Farbton als die der Bromisoviolanthronpigmente des Standes der Technik.

## Beispiel 2

50 Teile Bromisoviolanthron (hergestellt nach DE-PS 12 84 092, Bsp. 1) werden als wasserfeuchter Preßkuchen in 1.700 Teile Wasser eingetragen, homogen gerührt. Bei 40°C werden 40 Teile Natronlauge (50 prozentig) und 20 Teile Natriumdithionit zugegeben und 2 Stunden bei dieser Temperatur gerührt. Das ausgefallene Salz der Leukoverbindung wird nach dem Abkühlen auf 20°C abgesaugt und mit 200 Teilen blinder Küpe gewaschen.

Das Filtergut wird mit Wasser zu einer Suspension mit einem Trockengehalt von etwa 10 % verrührt. Dann werden 15 Teile Natronlauge (50 prozentig) und 5 Teile Natriumdithionit unter Rühren zugegeben. Zu der Suspension werden 5 Teile Lauryl-trimethylammonium-chlorid und 800 Teile Glasperlen (Durchmesser 0,8 bis 1 mm) gegeben und die Suspension mit einem hochtourigen Rührer (2.000 U/min) unter Luftzutritt 3 Stunden lang gerührt. Die weitere Aufarbeitung folgt Beispiel 1.

Man erhält 48 Teile eines Pigments das die gleichen Eigenschaften aufweist wie das nach dem Beispiel 1 erhaltene.

## Beispiel 3

100 Teile Bromisoviolanthron (hergestellt nach Beispiel 1 der DE-PS 12 84 092) werden als wasserfeuchter Preßkuchen in 900 Teile Wasser eingetragen. Unter gutem Durchmischen werden bei 25°C 40 Teile Natronlauge (50 prozentig) und 10 Teile Natriumdithionit zugegeben. Die Suspension wird 10 Minuten heftig durchmischt, dann wird eine alkalische Lösung von 12 Teilen Kolophonium-Seife in Form des Natrium-Salzes eingerührt. Zu der Mischung werden dann 1.600 Teile Glasperlen (Durchmesser 0,8 bis 1 mm) gegeben und die Mischung mit einem hochtourigen Rührer (2.000 U/min) unter Luftzutritt 4 Stunden lang gerührt. Die weitere Aufarbeitung folgt Beispiel 1. Man erhält 101 Teile eines Pigments, das Einbrennlacke in brillanten Violett-Tönen anfärbt. In den coloristischen Eigenschaften entspricht das Pigment dem Pigment des Beispiel 1.

Vergleichsbeispiel (DE-PS 12 84 092, Beispiel 1)

20 Teile Bromisoviolanthron werden in 400 Teile 90 prozentige Schwefelsäure eingetragen und 20 Stunden bei Raumtemperatur gerührt. Dann wird die Mischung auf 80°C erwärmt und 45 Minuten bei 80°C gerührt. Nach dem Abkühlen auf 25°C wird die Suspension in 4.000 Teile Wasser von 20°C, in dem 2 Teile Dodecylalkohol emulgiert sind, unter kräftigem Rühren eingegossen. Man rührt 30 Minuten nach, filtriert und wäscht neutral. Das Filtergut wird bei 70°C im Vakuum getrocknet. Es werden 20 Teile Pigment erhalten, das im Vergleich zu den nach den Beispielen 1, 2 und 3 erhaltenen, im Vollton im Einbrennlack deckende, deutlich trübere Färbungen liefert. Im Vergleich zu den Bromisoviolanthron-Pigmenten der Beispiele 1, 2 und 3, liegt die Farbstärke des Pigments nur bei etwa 70 %, bei gleichzeitig deutlich trüberen und blaustichigerem Farbton.

0015563

## Beispiel 4

100 Teile Bromisoviolanthron (hergestellt nach Beispiel 1 der DE-PS 12 84 092) werden als wasserfeuchter Preßkuchen in 900 Teile Wasser eingetragen. Unter gutem Durchmischen werden bei 25°C 40 Teile Natronlauge (50 %ig) und 18 Teile Natriumdithionit zugegeben und die Mischung 10 Minuten heftig durchmischt.

Dann werden 15 Teile Kolophoniumseife in Form einer alkalischen Lösung des Natriumsalzes und 3 Teile Lauryl--trimethylammoniumchlorid eingerührt. Nach dem Zugeben von 1600 Teile Kunststoffperlen (Durchmesser 0,8 bis 1 mm) wird die Mischung mit einem hochtourigen Rührer (n = 2000/min) unter Luftzutritt 4 Stunden lang gerührt. Die Aufarbeitung erfolgt wie im Beispiel 1 angegeben.

Ausbeute: 103 Teile Pigment, das im Einbrennlack brillante Violettfärbungen liefert. In den coloristischen Eigenschaften entspricht das Pigment dem des Beispiels 1, jedoch ist die Dispergierhärte gegenüber dem Pigment des Beispiels 1 deutlich geringer.

## Beispiele 5 bis 12

Verfährt man wie im Beispiel 4 angegeben, wendet jedoch die in folgenden Tabelle genannten oberflächenaktiven Mittel in der angegebenen Menge an, so erhält man ebenfalls im Vergleich zum Stand der Technik coloristisch überlegene Pigmentformen.

Die mit den Pigmenten erhaltenen Färbungen wurden mit Färbungen des nach Beispiel 4 erhaltenen Pigments verglichen (Spalte 4 der Tabelle).

O.Z. 0050/033700

Tabelle

| Bei-spiel | oberflächenaktives Mittel | [Teile] | Ausbeute [Teile] | Pigment coloristische Beurteilung im Vergleich zum Pigment des Beispiels 4 |
|---|---|---|---|---|
| 5 | oxäthyliertes Kolophonium (30 Mol ÄO/Mol) | 10 | 102 | ca. 10 % farbschwächer, deutlich blauer |
| 6 | dimerisiertes Kolophonium (Natriumsalz) | 10 | 102 | wie Beispiel 4, jedoch etwas schwerer dispergierbar |
| 7 | Ölsäureäthanolamid | 5 | 103 | ca. 10 % farbschwächer, sonst wie Beispiel 4 |
| 8 | Kolophonium (Natriumsalz) | 15 | 102 | ca. 5 % farbschwächer, sonst wie |
| | + oxäthyliertes Oleylamin (6-10 ÄO/Mol) mit Dimethylsulfat quaterniert | 5 | | wie Beispiel 4 |
| 9 | Kolophonium (Natriumsalz) | 12 | 103 | entspricht Beispiel 4 |
| | + Umsetzungsprodukt aus Stearinsäure und Triäthanolamin mit Dimethylsulfat quaterniert | 3 | | |
| 10 | Kolophonium (Natriumsalz) | 15 | 103 | entspricht Beispiel 4 |
| | + Distearyl-dimethylammoniumchlorid | 2 | | |
| 11 | $C_{16}$-Fettalkohol | 8 | 102 | ca. 15 % farbschwächer, blauer |
| | + $C_{16}$-Fettalkohol mit 25-30 Mol ÄO/Mol oxäthyliert | 6 | | gleiche Reinheit des Farbtons, leichter dispergierbar |
| 12 | Dimerisiertes Kolophonium (Natriumsalz) | 15 | 101 | ca. 10 % farbschwächer bei vergleichbarem Farbton und Reinheit |
| | + Benzylpyridiniumchlorid | 3 | | etwas schwerer dispergierbar |

Patentansprüche

1. Verfahren zur Herstellung von Bromisoviolanthrompigmenten der α-Modifikation mit hoher Farbstärke, dadurch gekennzeichnet, daß man eine Suspension von Leukobromisoviolanthron in alkalisch-wäßrigem Medium in Gegenwart von oberflächenaktiven Mitteln unter Einwirkung von Scherkräften bei Temperaturen zwischen 10 und 100°C oxidiert und das Pigment isoliert.

2. Verfahren gemäß Anspruch 1, dadurch gekennzeichnet, daß man eine wäßrig-alkalische Suspension der Leukoverbindung oxidiert, die zu Beginn der Oxidation - bezogen auf die Leukoverbindung - 1 bis 20 Gewichtsprozent Natriumdithionit enthält.

3. Verfahren nach Den Ansprüchen 1 oder 2, dadurch gekennzeichnet, daß die Oxidation in einem wäßrigen Medium erfolgt, das zu Beginn - bezogen auf die Leukoverbindung - 5 bis 30 Gewichtsprozent Natriumhydroxid, 1 bis 20 Gewichtsprozent Natriumdithionit und 0,2 bis 20 Gewichtsprozent oberflächenaktive Mittel enthält.

4. Verfahren nach den Ansprüchen 1 oder 2, dadurch gekennzeichnet, daß die Oxidation in einem wäßrigen Medium erfolgt, das zu Beginn - bezogen auf die Leukoverbindung - 5 bis 30 Gewichtsprozent Natriumhydroxid, 5 bis 15 Gewichtsprozent Natriumdithionit und 0,2 bis 20 Gewichtsprozent oberflächenaktive Mittel enthält.

5. Verfahren nach den Ansprüchen 1, 2, 3 oder 4, dadurch gekennzeichnet, daß die Oxidation in Gegen-

0015563

wart von 0,5 bis 15 Gewichtsprozent, bezogen auf die Leukoverbindung, an oberflächenaktiven Mitteln erfolgt.

6. Verfahren nach den Ansprüchen 1, 2, 3, 4 oder 5, _dadurch gekennzeichnet,_ daß die Oxidation der Leukoverbindung bei Temperaturen zwischen 20 und 60°C erfolgt.

7. Verfahren nach den Ansprüchen 1 bis 6, _dadurch gekennzeichnet,_ daß man als oberflächenaktive Mittel Abietinsäure, Kolophonium, dimerisiertes oder hydriertes Kolophonium in Form der Alkalimetall- oder Ammoniumsalze oder Salze des Tri-($C_1$- bis $C_4$-alkyl)-phenylammoniums, des Di-($C_1$- bis $C_4$-alkyl)-dibenzylammoniums, des $C_{10}$- bis $C_{20}$-Alkyl-tri-($C_1$- bis $C_4$-alkyl)ammoniums, des Di-($C_{10}$- bis $C_{20}$-alkyl)-di-($C_1$- bis $C_4$-alkyl)ammoniums, des N-$C_{10}$- bis $C_{16}$-Alkylpyridiniums, des N-$C_{10}$- bis $C_{18}$-Alkylimidazoliniums oder des quaternierten Esters aus Triäthanolamin und Stearinsäure (1 : 1 Mol) in Form der Chloride, Sulfate, Methylsulfate, Toluol- oder Benzolsulfonate verwendet.

8. Verfahren nach den Ansprüchen 1 bis 6, _dadurch gekennzeichnet,_ daß man eine Mischung aus anionischen und kationischen oberflächenaktiven Mitteln verwendet.

9. Verfahren nach Anspruch 8, _dadurch gekennzeichnet,_ daß man als oberflächenaktive Mittel ein Gemisch aus Kolophonium, dimerisierten oder hydriertem Kolophonium und $C_{10}$- bis $C_{20}$-Alkyl-tri-($C_1$- bis $C_4$-alkyl)-ammoniumsalz oder Di-($C_{10}$- bis $C_{20}$-alkyl)-di-($C_1$- bis $C_4$-alkyl)ammoniumsalz verwendet.

10. Bromisoviolanthron in Pigmentform, erhalten nach dem Verfahren gemäß den Ansprüchen 1 bis 9.

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| A | DE - A - 2 803 362 (BASF) <br><br> * Ansprüche 1-4 * <br><br> -- | 1 | C 09 B 67/00 <br> 3/22 |
| A | DE - A - 2 748 860 (BASF) <br><br> * Ansprüche 1-5 * <br><br> -- | 1 | |
| A | GB - A - 263 826 (SOC.CHEMICAL INDUSTRY BASLE) <br><br> * Ansprüche 1-4 * <br><br> ---- | 1 | |

**RECHERCHIERTE SACHGEBIETE (Int. Cl. 3)**

C 09 B 67/00
3/22-
3/34

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 17-06-1980 | DELANGHE |

EPA form 1503.1  06.78